# EUROPÄISCHE PATENTSCHRIFT

(11) **EP 2 946 847 B1**
(45) Veröffentlichungstag und Bekanntmachung des Hinweises auf die Patenterteilung: **08.12.2021**
(21) Anmeldenummer: 15000136.0
(22) Anmeldetag: 19.01.2015
(51) Int. Cl.: B21D 5/02, B21D 37/14

(54) **Werkzeugwechselvorrichtung für eine Umformpresse**
Tool changing device for a forming press
Dispositif de changement d'outil pour une presse de formage

(30) Priorität: 23.05.2014 EP 14001816
(43) Veröffentlichungstag der Anmeldung: 25.11.2015
(73) Patentinhaber: TRUMPF Maschinen Austria GmbH & Co. KG., 4061 Pasching (AT)
(72) Erfinder: Felder, Johann, 6060 Hall in Tirol (AT)
(74) Vertreter: Ofner, Clemens

(56) Entgegenhaltungen:
- EP-A2- 0 377 865
- DE-A1- 19 643 163
- DE-U1- 29 705 509
- US-A- 5 791 852
- None

## Beschreibung

Die Erfindung betrifft eine Werkzeugwechselvorrichtung für eine Umformpresse, insbesondere für eine Abkantpresse, mit wenigstens einem Werkzeugmagazin und wenigstens einer Übertragungsvorrichtung zur Übertragung der im wenigstens einen Werkzeugmagazin speicherbaren Umformwerkzeuge vom wenigstens einen Werkzeugmagazin zur Umformpresse und in umgekehrter Richtung. Die Erfindung betrifft weiterhin eine Anordnung aus einer Umformpresse und einer erfindungsgemäßen Werkzeugwechselvorrichtung.

Die US5791852A offenbart eine Werkzeugwechselvorrichtung gemäß dem Oberbegriff des Anspruch 1. Diese umfasst einen Speicher für die Formwerkzeuge. Der Speicher umfasst eine Vielzahl von Speicherzellen, die vertikal in zwei Säulen angeordnet sind. Zwischen den beiden Säulen ist ein Lift vorgesehen. Zum Auswechseln eines Formwerkzeuges von der Presse wird eine Kette verwendet, welche das Formwerkzeug aus der Presse auf den Lift zieht. Durch vertikales Verfahren des Liftes wird das Formwerkzeug in die entsprechende Speicherzelle verfahren.

Umformpressen, wie z. B. Biege- oder Abkantpressen, werden in der Regel mit austauschbaren Werkzeugsätzen betrieben. Je nach Art des herzustellenden Werkstücks bzw. je nach Art des durchzuführenden Biegeschritts an einem Werkstück muss ein bestimmter Werkzeugsatz verwendet werden. Das Umrüsten der Werkzeugsätze erfolgt dabei meistens per Hand. Das ist jedoch nachteilig, da der Umrüstvorgang, insbesondere bei schweren Umformwerkzeugen, körperlich anstrengend ist. Außerdem erfordert er einen hohen Zeitaufwand, wodurch insbesondere die Fertigung kleiner und mittlerer Losgrößen teuer ist.

Es gibt Ansätze, den Umrüstprozess zu automatisieren. Dabei kommen Robotorarme oder verfahrbare Greifer zum Einsatz, um die Werkzeugsätze auszutauschen.

Derartige Lösungen sind allerdings technologisch sehr aufwendig und haben aufgrund des Arbeitsraums, den z.B. ein Roboterarm in Anspruch nimmt, einen hohen Platzbedarf.

Die Aufgabe der vorliegenden Erfindung besteht darin, die beschriebenen Nachteile unter Angabe einer gegenüber dem Stand der Technik verbesserten Werkzeugwechselvorrichtung bzw. einer Anordnung aus einer Umformpresse und einer solchen Werkzeugwechselvorrichtung zu vermeiden.

Diese Aufgabe wird durch die Merkmale des unabhängigen Anspruchs 1 gelöst.

Es ist also erfindungsgemäß vorgesehen, dass die wenigstens eine Übertragungsvorrichtung eine antreibbare Schubkette zur Übertragung von Druck- und Zugkräften umfasst.

Durch das Vorsehen einer Schubkette wird eine äußerst zuverlässige und präzise arbeitende Übertragungsvorrichtung realisiert. Außerdem kann die Werkzeugwechselvorrichtung sehr kompakt gebaut werden.

Gemäß einer vorteilhaften Ausgestaltung der Erfindung ist es vorgesehen, dass die Schubkette wenigstens eine Koppelungsvorrichtung zur temporären Koppelung eines Umformwerkzeugs an die Schubkette umfasst. Dabei kann es besonders vorteilhaft sein, wenn ein Messsystem zur, vorzugsweise fortlaufenden, Bestimmung der Position der Koppelungsvorrichtung - und damit zur Bestimmung der Position des mit der Koppelungsvorrichtung gekoppelten Umformwerkzeugs in Bezug auf die Werkzeugwechselvorrichtung bzw. in Bezug auf die Umformpresse - vorgesehen ist. Die Kenntnis der Position der Koppelungsvorrichtung bzw. eines mit der Koppelungsvorrichtung gekoppelten Formwerkzeugs ermöglicht den Aufbau mehrteiliger Werkzeuge, d.h. den Aufbau von Werkzeugen, die mehrere nebeneinander in der Umformpresse angeordnete Teil-Werkzeuge umfassen.

Das Messsystem kann in die Koppelungsvorrichtung integriert sein. Alternativ oder ergänzend dazu kann auch ein Messsystem vorgesehen sein, dass sich nicht mit der Koppelungsvorrichtung mitbewegt, sondern an einem in Bezug auf die Werkzeugwechselvorrichtung bzw. in Bezug auf die Umformpresse positionsfesten Bauteil angeordnet ist und die Position der Koppelungseinheit bzw. eines mit der Koppelungseinheit gekoppelten Umformwerkzeugs z.B. optisch erfasst.

Erfordert die Koppelungsvorrichtung die Versorgung mit elektrischer Energie bzw. die Weiterleitung von Signalen zur bzw. von der Koppelungsvorrichtung, so ist es weiterhin vorteilhaft, wenn die Schubkette aus Kettengliedern gebildet ist, die Ausnehmungen zur Aufnahme von, vorzugsweise elektrischen, Leitungen aufweisen. In diesem Fall überträgt die Schubkette also nicht nur Druck- und Zugkräfte, sondern eben z.B. auch elektrische Energie und Signale.

Gemäß einer alternativen Ausführungsform ist es vorgesehen, dass die Koppelungsvorrichtung einen Speicher zur Speicherung elektrischer Energie umfasst. Dabei kann es vorgesehen sein, dass der Speicher austauschbar an der Koppelungsvorrichtung angeordnet ist, so dass er, wenn er leer ist, durch einen geladenen Speicher ausgetauscht werden kann. Alternativ dazu kann es vorgesehen sein, dass die Koppelungsvorrichtung eine Schnittstelle zur Übertragung elektrischer Energie in den Speicher umfasst. Ist gleichzeitig z.B. im Bereich eines Kettenspeichers zur Speicherung der Schubkette eine Gegenschnittstelle vorgesehen, so kann der Speicher immer dann nachgeladen werden, wenn sich die Schubkette im Kettenspeicher befindet, d.h. in Ruhepausen zwischen Werkzeugwechselvorgängen.

Weiterhin kann auch eine Kommunikationsvorrichtung zum drahtlosen Austausch von Daten, z.B. mit einem Steuerungssystem zur Steuerung der Werkzeugwechselvorrichtung, von der Koppelungsvorrichtung umfasst sein. Sind eine derartige Kommunikationsvorrichtung und gleichzeitig ein Speicher zur Speicherung elektrischer Energie vorgesehen, so entfällt auch die Notwendigkeit, in den Kettengliedern Ausnehmungen zur Aufnahme von, vorzugsweise elektrischen, Leitungen vorzusehen.

Als vorteilhaft hat es sich herausgestellt, wenn die Koppelungsvorrichtung ein magnetisches Koppelelement, vorzugsweise in Form von wenigstens einem Permanentmagneten in Kombination mit wenigstens einem Elektromagneten, umfasst. Die Verwendung eines Permanentmagneten ist deshalb vorteilhaft, da hierdurch sichergestellt werden kann, dass die Umformwerkzeuge immer, d.h. auch bei Stromausfall, von der Koppelungsvorrichtung gehalten werden. Durch die Kombination mit einem Elektromagneten lässt sich die wirksame Gesamtmagnetkraft regulieren, was im Hinblick auf verschieden schwere Umformwerkzeuge oder die Abkoppelung der Umformwerkzeuge relevant ist. Zur Regulierung der Magnetkraft muss lediglich der Stromfluss durch den Elektromagneten verändert werden.

Eine weitere vorteilhafte Maßnahme besteht darin, dass die Koppelungsvorrichtung wenigstens einen Sensor zur Detektion eines an die Koppelungsvorrichtung angekoppelten Umformwerkzeugs umfasst. Diese Maßnahme erleichtert die Steuerung von Werkzeugwechselvorgängen.

Als günstig hat es sich erwiesen, dass die Schubkette über wenigstens eine Antriebsvorrichtung antreibbar ist, wobei die wenigstens eine Antriebsvorrichtung bevorzugt wenigstens ein Paar, besonders bevorzugt zwei Paare, von Antriebswellen umfasst. Dabei kann es vorgesehen sein, dass die Kraftübertragung von der wenigstens einen Antriebsvorrichtung auf die Schubkette über einen Reibschluss und/oder über einen Formschluss erfolgt. Weiterhin kann es vorgesehen sein, dass die Antriebswellen (zur Erhöhung des Reibschlusses) beschichtet sind, und/oder Anpresskräfte der Antriebswellen an die Schubkette mittels wenigstens einer Einstelleinrichtung, die vorzugsweise wenigstens eine Feder umfasst, verstellbar sind.

Ein reibschlüssiger Antrieb hat im Vergleich zu einem formschlüssigen Antrieb den Vorteil, dass eine geringere Geräuschentwicklung stattfindet und die Schubkette weniger abgenutzt wird. Andererseits lässt sich die Schubkette bei einem formschlüssigen Antrieb genauer positionieren.

Die ungenauere Positionierbarkeit der Schubkette bei einem reibschlüssigen Antrieb gegenüber einem formschlüssigen Antrieb lässt sich jedoch durch das Vorsehen des Messsystems zur Bestimmung der Position der Koppelungsvorrichtung bzw. eines mit der Koppelungsvorrichtung gekoppelten Umformwerkzeugs kompensieren.

Ein weiterer Vorteil der Verwendung einer Schubkette besteht darin, dass sie sich äußerst kompakt speichern lässt. Hierzu ist es gemäß einem vorteilhaften Ausführungsbeispiel der Erfindung vorgesehen, dass die Werkzeugwechselvorrichtung wenigstens einen, vorzugsweisen spiralförmig ausgebildeten, Kettenspeicher zur Speicherung der Schubkette umfasst.

Gemäß einer bevorzugten Ausführungsform der Erfindung ist es vorgesehen, dass das wenigstens eine Werkzeugmagazin eine antreibbare, drehbar gelagerte Scheibe mit einer mittigen Ausnehmung umfasst und die wenigstens eine Schubkette aus dem Bereich der Ausnehmung zur Übertragung der im wenigstens einen Werkzeugmagazin speicherbaren Umformwerkzeuge vom wenigstens einen Werkzeugmagazin zur Umformpresse und in umgekehrter Richtung zuführbar ist. Zur Einwechslung eines Umformwerkzeugs muss die Scheibe nur an eine bestimmte Position gedreht werden. Anschließend kann das Umformwerkzeug direkt von der Scheibe mittels der Schubkette zur Umformpresse bzw. in umgekehrter Richtung übertragen werden. Dadurch ist eine schnelle Auswechslung der Umformwerkzeuge möglich.

Um die Werkzeugwechselvorrichtung flexibel an unterschiedliche Umformpressen anpassen zu können, kann es weiterhin vorgesehen sein, dass das wenigstens eine Werkzeugmagazin höhenverstellbar und/oder seitenverstellbar zur Anpassung der Höhenlage bzw. Seitenlage des wenigstens einen Werkzeugmagazins an die Umformpresse ausgebildet ist.

Als vorteilhaft hat es sich herausgestellt, dass das wenigstens eine Werkzeugmagazin eine antreibbare, drehbar gelagerte, und in Gebrauchslage vorzugsweise horizontal ausgerichtete, Scheibe mit Aufnahmemitteln zur Aufnahme der Umformwerkzeuge umfasst, wobei die Aufnahmemittel besonders bevorzugt derart ausgebildet sind, dass die Umformwerkzeuge bei einer Drehung der Scheibe fixiert sind. Die Fixierung kann dabei z. B. durch eine Verklemmung erfolgen. Um die Speicherkapazität zu erhöhen, können mehrere derartige Scheiben, deren Höhenlagen, vorzugsweise automatisch, verstellbar sind, vorgesehen sein.

Da eine Umformpresse, wie z. B. eine Abkantpresse, zwei verschiedene Arten von Umformwerkzeugen erfordert, nämlich zum einen Stempelwerkzeuge und zum anderen Gegenwerkzeuge für die Stempelwerkzeuge, hat es sich als vorteilhaft erwiesen, dass die Werkzeugwechselvorrichtung wenigstens ein erstes Werkzeugmagazin zur Speicherung der Stempelwerkzeuge und wenigstens ein zweites Werkzeugmagazin zur Speicherung der Gegenwerkzeuge für die Stempelwerkzeuge umfasst, wobei die Werkzeugmagazine in Gebrauchslage vorzugsweise übereinander angeordnet sind.

Diese Ausgestaltung der Erfindung kann in günstiger Weise dadurch weitgebildet werden, dass die Werkzeugwechselvorrichtung eine erste Übertragungsvorrichtung zur Übertragung der im ersten Werkzeugmagazin speicherbaren Umformwerkzeuge vom ersten Werkzeugmagazin zur Umformpresse und in umgekehrter Richtung sowie eine zweite Übertragungsvorrichtung zur Übertragung der im zweiten Werkzeugmagazin speicherbaren Umformwerkzeuge vom zweiten Werkzeugmagazin zur Umformpresse und in umgekehrter Richtung umfasst, wobei vorzugsweise beide Übertragungsvorrichtungen eine antreibbare Schubkette zur Übertragung von Druck- und Zugkräften umfassen. Die Idee hinter dieser Ausgestaltung besteht also darin, dass die Stempelwerkzeuge sowie die Gegenwerkzeuge für die Stempelwerkzeuge gleichzeitig und unabhängig voneinander von dem jeweiligen Werkzeugmagazin zur Umformpresse und in umgekehrter Richtung übertragen werden können. Dadurch lässt sich die für den Umrüstprozess benötigte Zeit weiter reduzieren.

Um ein vollautomatisches Umrüsten in vorteilhafter Weise realisieren zu können, kann es vorgesehen sein, dass ein Steuerungssystem zur Steuerung der Werkzeugwechselvorrichtung, vorzugsweise zur vollautomatischen Übertragung der im wenigstens einen Werkzeugmagazin speicherbaren Umformwerkzeuge vom wenigstens einen Werkzeugmagazin zur Umformpresse und in umgekehrter Richtung gemäß einem vorbestimmten Programm, vorgesehen ist, wobei das Steuerungssystem vorzugsweise wenigstens einen Prozessor und/oder einen Speicher zur Speicherung eines Programms umfasst. Läuft der Umrüstprozess vollautomatisch gemäß einem vorbestimmten Programm ab, so ist es nicht mehr erforderlich, dass sich eine Bedienperson in unmittelbarer Nähe der Werkzeugwechselvorrichtung bzw. der Umformpresse aufhält. Hierdurch lässt sich die Sicherheit für das Bedienpersonal erhöhen.

Unterstützend kann die Sicherheit dadurch erhöht werden, dass ein Detektionssystem zur Detektion eines sich in der Nähe der Werkzeugwechselvorrichtung befindlichen Objekts, vorzugsweise einer Bedienperson, vorgesehen ist. Auf diese Weise kann sichergestellt werden, dass sich niemand im Gefahrenbereich der Werkzeugwechselvorrichtung bzw. der Umformpresse während des Umrüstvorgangs aufhält. Vorteilhafterweise umfasst das Detektionssystem Lasermittel, wie z. B. Lichtschranken oder dergleichen, die während des Umrüstvorgangs aktiv sind und bei Detektion eines Objekts eine sofortige Unterbrechung des Umrüstvorgangs bewirken.

Und schließlich kann es gemäß einem vorteilhaften Ausführungsbeispiel der Erfindung vorgesehen sein, dass die Werkzeugwechselvorrichtung wenigstens eine Vorrichtung zur Anbindung der Werkzeugwechselvorrichtung an die Umformpresse umfasst, wobei diese Vorrichtung vorzugsweise eine Führung für die Schubkette und/oder damit verbundene Elemente aufweist.

Dabei kann es gemäß einer besonders vorteilhaften Weiterbildung dieses Ausführungsbeispiels vorgesehen sein, dass die wenigstens eine Vorrichtung zur Anbindung der Werkzeugwechselvorrichtung an die Umformpresse eine Wendeeinheit zur Drehung der Umformwerkzeuge, vorzugsweise um 180°, umfasst. Mit einer solchen Wendeeinheit sind zwei Vorteile verbunden: Erstens ist es möglich, Umformwerkzeuge, die nicht symmetrisch sind, in zwei unterschiedlichen Stellungen in Bezug auf die Klemmbalken der Umformpresse zu verwenden. Zweitens lässt sich mittels der Wendeeinheit in einfacher Weise eine temporäre Entkoppelung von der Umformpresse herbeiführen. Das ist insbesondere in Bezug auf den oberen Klemmbalken vorteilhaft, da dieser die Relativbewegung der beiden Klemmbalken zueinander - und damit die Relativbewegung von darin eingespannten Umformwerkzeugen - während eines Umformvorgangs bewirkt. Eine Entkoppelung liegt dann vor, wenn sich die Wendeeinheit in einer Zwischenstellung zwischen 0° und 180° befindet.

Schutz wird auch begehrt für eine Anordnung aus einer Umformpresse und einer erfindungsgemäßen Werkzeugwechselvorrichtung sowie für die Verwendung einer Schubkette zur Übertragung von Druck- und Zugkräften in einer erfindungsgemäßen Werkzeugwechselvorrichtung.

Weitere Einzelheiten und Vorteile der vorliegenden Erfindung werden anhand der Figurenbeschreibung unter Bezugnahme auf die Zeichnungen im Folgenden näher erläutert. Dabei zeigt:
- Fig. 1: eine Anordnung aus einer erfindungsgemäßen Werkzeugwechselvorrichtung und einer Umformpresse in Form einer Abkantpresse gemäß einer ersten Ausführungsform,
- Fig. 2: einen Ausschnitt der erfindungsgemäßen in Fig. 1 dargestellten Werkzeugwechselvorrichtung,
- Fig. 3: einen Ausschnitt einer Schubkette in einer perspektivischen schematischen Ansicht gemäß einer ersten Ausführungsform,
- Fig. 4: eine Draufsicht auf die Schubkette gemäß Fig. 3,
- Fig. 5: eine mit einer Schubkette verbundene Koppelungsvorrichtung zur temporären Koppelung eines Umformwerkzeugs an die Schubkette gemäß einer ersten Ausführungsform,
- Fig. 6: eine Antriebsvorrichtung für die Schubkette,
- Fig. 7: einen Ausschnitt einer Schubkette in einer perspektivischen schematischen Ansicht gemäß einer zweiten Ausführungsform,
- Fig. 8: eine Draufsicht auf die Schubkette gemäß Fig. 7,
- Fig. 9: eine mit einer Schubkette verbundene Koppelungsvorrichtung zur temporären Koppelung eines Umformwerkzeugs an die Schubkette gemäß einer zweiten Ausführungsform,
- Fig. 10: eine Anordnung aus einer erfindungsgemäßen Werkzeugwechselvorrichtung und einer Umformpresse in Form einer Abkantpresse gemäß einer zweiten Ausführungsform, und
- Fig. 11 a), b): eine Wendeeinheit zur Drehung der Umformwerkzeuge, die bei der in der Fig. 10 dargestellten Ausführungsform vorgesehen ist, wobei die Teilfiguren a) und b) zwei unterschiedliche Stellungen der Wendeeinheit zeigen.

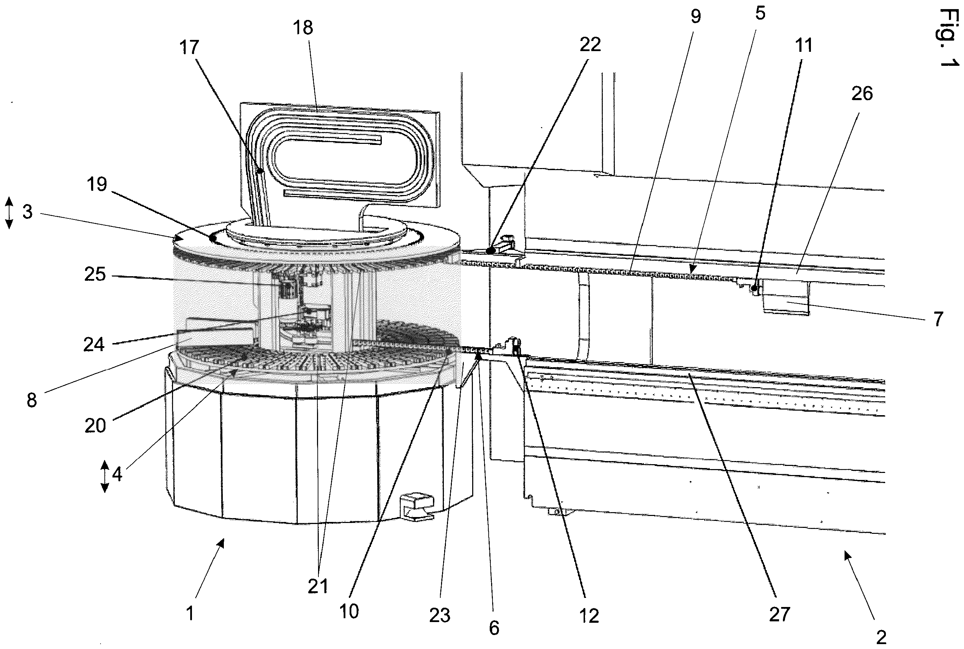

Figur 1 zeigt eine Anordnung aus einer Umformpresse 2 in Form einer Abkantpresse und einer Werkzeugwechselvorrichtung 1, die in unmittelbarer Nachbarschaft zu der Umformpresse 2, in diesem Falle neben der Umformpresse 2, aufgestellt ist.

Die Werkzeugwechselvorrichtung 1 umfasst ein erstes Werkzeugmagazin 3 zur Speicherung von Stempelwerkzeugen 7 und ein zweites Werkzeugmagazin 4 zur Speicherung von Gegenwerkzeugen 8 für die Stempelwerkzeuge 7, wobei die beiden Werkzeugmagazine 3 und 4 in Gebrauchslage übereinander angeordnet sind.

Jedes der Werkzeugmagazine 3 bzw. 4 weist eine antreibbare, drehbar gelagerte und in Gebrauchslage horizontal ausgerichtete Scheibe 19 bzw. 20 mit Aufnahmemitteln 21 zur Aufnahme der Umformwerkzeuge 7 und 8 auf, wobei diese Aufnahmemittel 21 derart ausgebildet sind, dass die Umformwerkzeuge 7 und 8 bei einer Drehung der Scheibe 19 bzw. 20 fixiert sind.

In der Figur 1 ist die Antriebsvorrichtung 25 für das erste, d. h. obere Werkzeugmagazin 3 zur Speicherung der Stempelwerkzeuge 7 zu sehen. Die Antriebsvorrichtung für das zweite Werkzeugmagazin 4 ist im Gehäuse der Werkzeugwechselvorrichtung 1 unterhalb des zweiten Werkzeugmagazins 4 zur Speicherung der Gegenwerkzeuge 8 für die Stempelwerkzeuge 7 angeordnet und damit nicht sichtbar.

Die beiden Werkzeugmagazine 3 und 4 sind höhenverstellbar ausgebildet, sodass die Höhenlage der Werkzeugmagazine 3 und 4 in einfacher Weise in Bezug auf die Umformpresse 2 angepasst werden kann.

Die Werkzeugwechselvorrichtung 1 umfasst eine erste Übertragungsvorrichtung 5 zur Übertragung der im ersten Werkzeugmagazin 3 speicherbaren Umformwerkzeuge 7 vom ersten Werkzeugmagazin 3 zur Umformpresse 2 und in umgekehrter Richtung, sowie eine zweite Übertragungsvorrichtung 6 zur Übertragung der im zweiten Werkzeugmagazin 4 speicherbaren Umformwerkzeuge 8 vom zweiten Werkzeugmagazin 4 zur Umformpresse 2 und in umgekehrter Richtung. Die beiden Übertragungsvorrichtungen 5 und 6 weisen eine antreibbare Schubkette 9 bzw. 10 zur Übertragung von Druck- und Zugkräften auf.

Außerdem umfasst jede der beiden Schubketten 9 und 10 eine Koppelungsvorrichtung 11 bzw. 12 zur temporären Koppelung eines Umformwerkzeuges 7 bzw. 8 an die Schubkette 9 bzw. 10, wobei diese Koppelungsvorrichtung 11 bzw. 12 im dargestellten Ausführungsbeispiel an einem ersten Ende der Schubkette 9 bzw. 10 angeordnet ist.

Die Schubketten 9 und 10 sind, ausgehend von einem zweiten Ende, jeweils in einem spiralförmig ausgebildeten Kettenspeicher 17 bzw. 18, der im oberen Bereich der Werkzeugwechselvorrichtung 1 angeordnet ist, speicherbar.

Bei dem dargestellten Ausführungsbeispiel ist es also vorgesehen, dass zwei unabhängige voneinander arbeitende Schubketten 9 und 10 zur Übertragung einerseits der Stempelwerkzeuge 7 und andererseits der Gegenwerkzeuge 8 für die Stempelwerkzeuge 7 vorgesehen sind. Alternativ ist es auch denkbar, dass nur eine Schubkette vorgesehen ist, wobei der mittlere Teil der Schubkette in einem Puffer zwischengespeichert wird. Auch bei einer derartigen Konfiguration könnten die beiden Enden der Schubkette unabhängig voneinander arbeiten.

Die Werkzeugwechselvorrichtung 1 ist über zwei Vorrichtungen 22 und 23 an die Umformpresse 2 angebunden, wobei die beiden Vorrichtungen 22 und 23 jeweils eine Führung für die Schubkette 9 bzw. 10 und/oder damit verbundene Elemente aufweisen. Im dargestellten Ausführungsbeispiel ist jeweils eines der Werkzeugmagazine 3 bzw. 4, eine der Vorrichtungen 22 bzw. 23 zur Anbindung der Werkzeugwechselvorrichtungen 1 an die Umformpresse 2 sowie einer der Klemmbalken 26 bzw. 27 der Abkantpresse 2 in einer gleichen Höhe angeordnet, sodass die Übertragung der Umformwerkzeuge 7 bzw. 8 zwischen den Werkzeugmagazinen 3 und 4 und der Umformpresse 2 jeweils in einer horizontalen Ebene erfolgt.

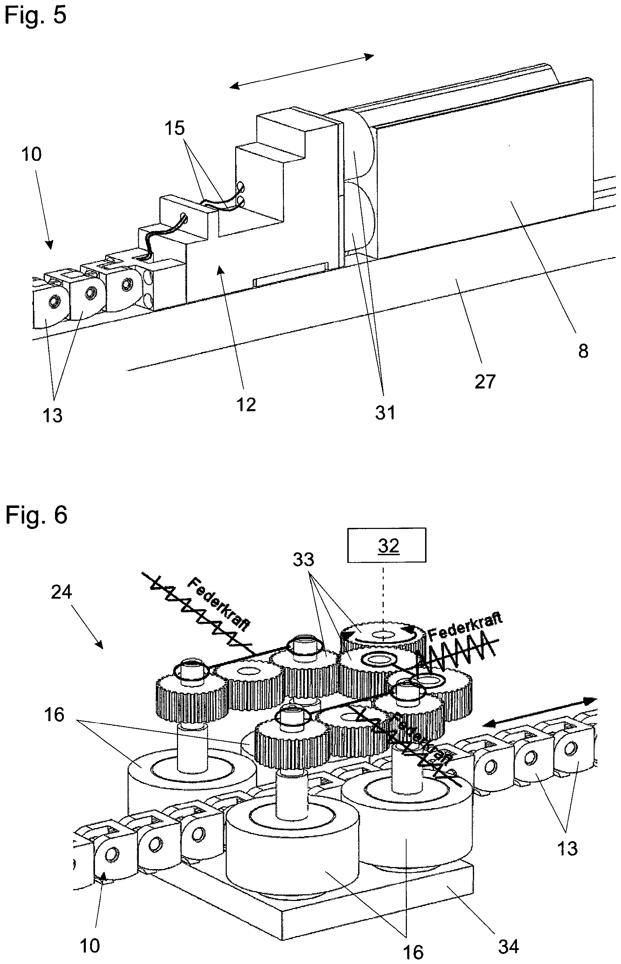

In Figur 1 ist auch die Antriebsvorrichtung 24 für die untere Schubkette 10 schematisch dargestellt. Details dieser Antriebsvorrichtung 24 werden im Zuge der Beschreibung der Figur 6 näher erläutert.

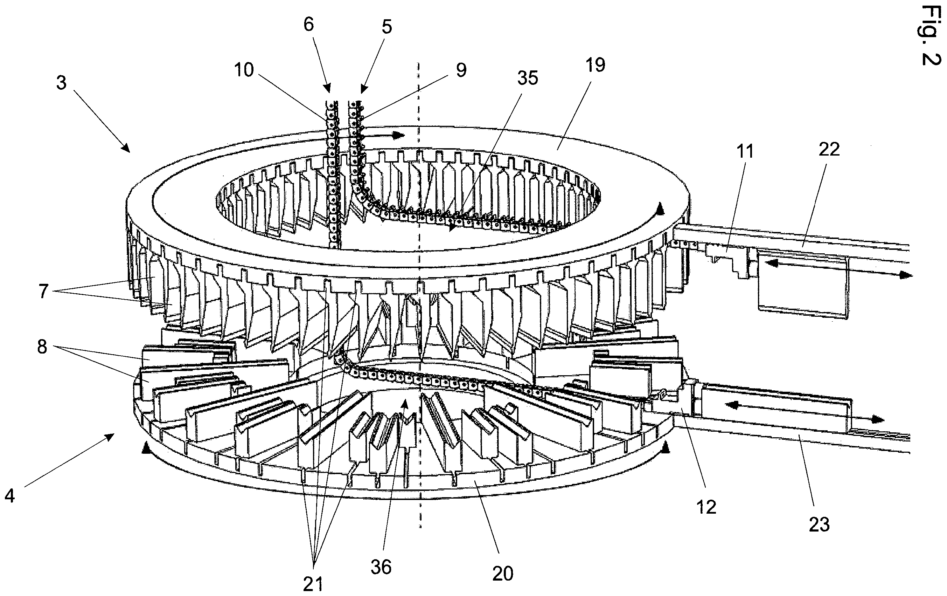

Figur 2 zeigt einen vergrößerten Ausschnitt der Werkzeugwechselvorrichtung. Diese Figur zeigt insbesondere die beiden Werkzeugmagazine 3 und 4 in Form der drehbar gelagerten Scheiben 19 und 20, auf denen die Stempelwerkzeuge 7 und die Gegenwerkzeuge 8 für die Stempelwerkzeuge 7 angeordnet sind. Die beiden Scheiben 19 und 20 weisen nutförmige Aufnahmemittel 21 zur Aufnahme der Umformwerkzeuge 7 und 8 auf, wobei diese Aufnahmemittel 21 derart ausgebildet sind, dass die Umformwerkzeuge 7 und 8 bei einer Drehung der Scheibe 19 bzw. 20 fixiert sind. Sobald die Scheiben 19 bzw. 20 zum Stillstand kommen, wird die Fixierung gelöst und das jeweils benötigte Umformwerkzeug 7 bzw. 8 kann aus der Aufnahmenut über die Vorrichtung 22 bzw. 23 zur Anbindung der Werkzeugwechselvorrichtung an die Umformpresse mittels der jeweiligen Schubkette 9 bzw. 10 auf den oberen bzw. unteren Klemmbalken der Abkantpresse geschoben werden. Mit anderen Worten: die Übertragung der Umformwerkzeuge 7 und 8 zwischen den beiden Werkzeugmagazinen 3 und 4 und der Umformpresse mittels der Schubketten 9 und 10 erfolgt direkt von bzw. direkt zu den Lagerplätzen der Umformwerkzeuge in den Werkzeugmagazinen 3 und 4 und nicht über Aufzüge oder ähnliche Maßnahmen, wie sie bei Werkzeugmagazinen gemäß dem Stand der Technik zwischen den Anbindungsstellen an die Umformpresse und den Lagerplätzen der Umformwerkzeuge vorgesehen sind.

Weiterhin sind die Aufnahmemittel 21 direkt in den Scheiben 19 und 20 ausgebildet, d.h., dass die Werkzeugmagazine 3 und 4 keine zusätzlichen Vorrichtungen zur Halterung der Umformwerkzeuge 7 bzw. 8 aufweisen.

Anhand der Figur 2 ist auch gut erkennbar, dass die Scheiben 19 und 20 der Werkzeugmagazine 3 und 4 bei diesem Ausführungsbeispiel jeweils eine mittige Ausnehmung aufweisen, wobei die Schubketten 9 und 10 durch zumindest eine der Ausnehmungen - in diesem Fall durch die Ausnehmung der Scheibe 19 des ersten Werkzeugmagazins 3 - zu den Kettenspeichern geführt werden.

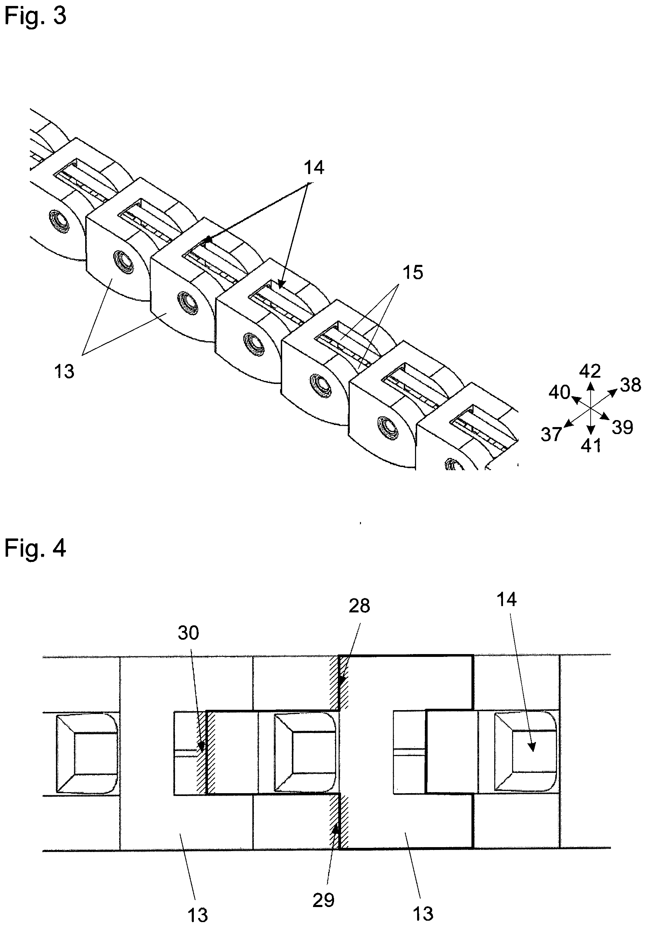

Aus der Figur 3 geht hervor, dass die Schubketten aus einzelnen Kettengliedern 13 gebildet sind, wobei die Kettenglieder 13 Ausnehmungen 14 zur Aufnahme von, vorzugsweise elektrischen, Leitungen 15 aufweisen. Mit Hilfe der Schubketten lassen sich also nicht nur Druck- und Zugkräfte, sondern - im Fall elektrischer Leitungen - auch elektrische Signale übermitteln.

Die Kettenglieder 13 sind derart ausgebildet, dass sie in Bezug auf zwei der drei Raumrichtungen - in dem Koordinatensystem bezeichnet mit 37, 38, 39 und 40 - vollständig sowie in Bezug auf die dritte Raumrichtung - je nach Definition des Koordinatensystems - in Richtung positiver Werte 41 bzw. negativer Werte 42 starr zueinander sind und in die entgegengesetzte Richtung, d.h. in Richtung negativer Werte 42 bzw. positiver Werte 41 biegbar zueinander sind, so dass die Schubketten in diese Richtung 42 aufgerollt werden können. Diese Konfiguration bewirkt eine große Stabilität der Schubketten.

Wie anhand der Figur 4 erkennbar ist, erfolgt die Übertragung der Druck- und Zugkräfte über drei Anlageflächen 28, 29 und 30, die zwischen zwei benachbarten Kettengliedern 13 ausgebildet sind. Auf diese Weise wird auch bei hohen Geschwindigkeiten, mit denen die Schubketten bewegt werden, eine exzellente Kraftübertragung zwischen den Kettengliedern 13 sichergestellt.

Figur 5 zeigt in einem vergrößerten Ausschnitt die Koppelungsvorrichtung 12 zur temporären Koppelung eines Umformwerkzeuges 8 an das Ende der Schubkette 10. In dem dargestellten Ausführungsbeispiel erfolgt die Koppelung über Koppelelemente 31 in Form von Elektromagneten. Die Stromversorgung der Elektromagnete wird über

Leitungen 15 sichergestellt. Alternativ oder ergänzend kann natürlich auch ein elektrisches Speichermedium zur Sicherstellung der Stromversorgung vorgesehen sein.

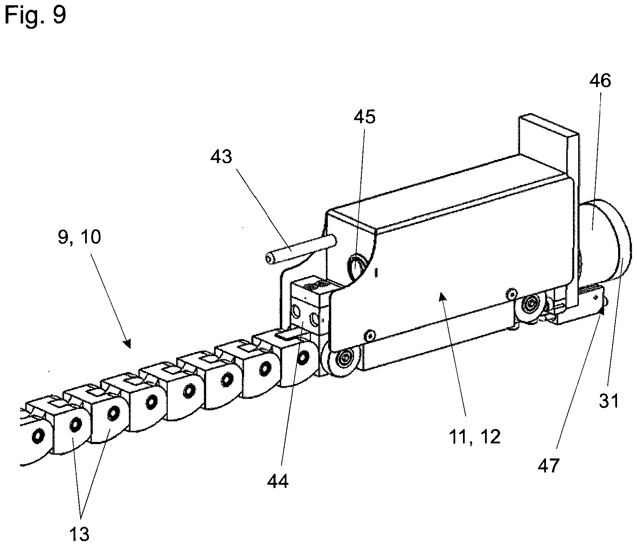

Die Koppelungsvorrichtung 12 umfasst auch ein Messsystem zur Bestimmung der Position der Koppelungsvorrichtung 12, über welches die Position der Koppelungsvorrichtung 12 und damit die Position des an die Kopplungsvorrichtung 12 gekoppelten Umformwerkzeugs 8 in Bezug auf die Umformpresse bzw. die Werkzeugwechselvorrichtung bestimmt werden kann. Alternativ oder ergänzend kann ein Messsystem vorgesehen sein, dass sich nicht mit der Koppelungsvorrichtung mitbewegt, sondern in Bezug auf die Werkzeugwechselvorrichtung bzw. in Bezug auf die Umformpresse ortsfest angeordnet ist und die Position der Koppelungsvorrichtung bzw. die Position eines mit der Koppelungsvorrichtung gekoppelten Umformwerkzeugs durch z.B. optische Mittel erfasst. Die Kommunikation mit dem Messsystem kann dabei - wie im dargestellten Fall - über Signalleitungen, die in die Schubkette 10 integriert sind, und/oder drahtlos, z.B. per Funk, erfolgen (vergleiche auch Figur 9).

In dem dargestellten Ausführungsbeispiel werden die Schubketten jeweils über eine Antriebsvorrichtung angetrieben, wobei die Antriebsvorrichtung 24 für die untere Schubkette 10 schematisch in Figur 6 dargestellt ist. Es ist erkennbar, dass die Antriebsvorrichtung 24 zwei hintereinander angeordnete Paare von Antriebswellen 16 umfasst. Die Kraftübertragung von den Antriebswellen 16 auf die Schubkette 10 erfolgt dabei über einen Reibschluss, wobei zur Erhöhung des Reibschlusses die Antriebswellen 16 beschichtet sind.

Darüber hinaus sind die Anpresskräfte der Antriebswellen 16 an die Schubkette 10 mittels Einstelleinrichtungen, die Federn umfassen, verstellbar. Durch die Federbelastung werden konstante Anpresskräfte der Antriebswellen 16 an die Schubkette 10 erzeugt - selbst dann, wenn an den Antriebswellen 16 und/oder an der Schubkette 10 Verschleißerscheinungen auftreten.

Angetrieben werden die Antriebswellen 16 von einem Motor 32 in Form eines Servomotors, wobei zwischen dem Motor 32 und den Antriebswellen 16 eine Getriebevorrichtung mit mehreren Zahnrädern 33 vorgesehen ist. Die Antriebsvorrichtung 24 umfasst weiterhin ein Gehäuse 34.

Eine weitere Möglichkeit, die Schubkette anzutreiben besteht darin, eine Antriebsvorrichtung vorzusehen, welche Antriebsräder und/oder Antriebsscheiben umfasst, die formschlüssig in die Schubkette eingreifen.

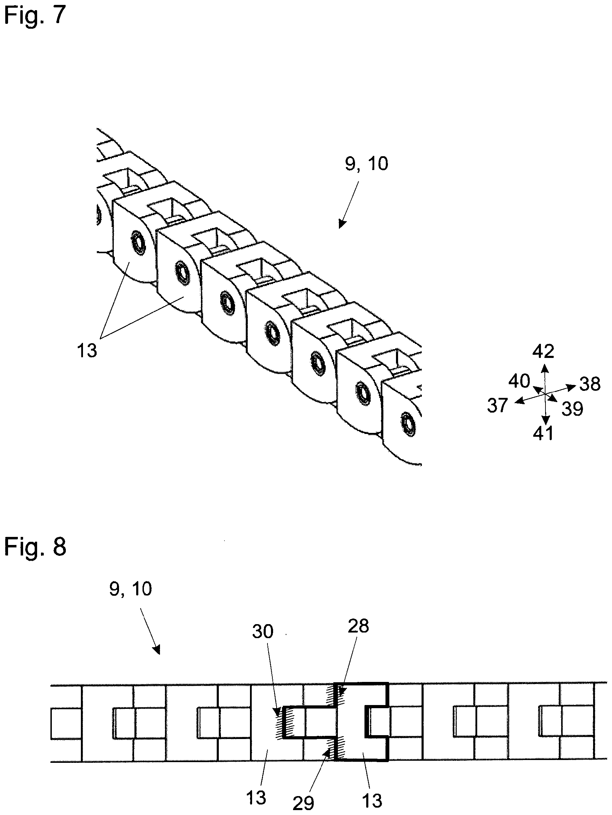

Die Figuren 7 bis 9 zeigen eine Schubkette 9 bzw. 10 gemäß einer weiteren Ausführungsform. Im Vergleich zu der in den Figuren 3 bis 5 dargestellten Ausführungsform, weist die Kettenglieder, aus denen die Schubkette zusammengesetzt ist, keine Ausnehmungen zur Aufnahme von, vorzugsweise elektrischen, Leitungen auf. Die Form und das Zusammenwirken der Kettenglieder sind ansonsten unverändert.

Eine Schubkette gemäß dieser Ausführungsform kommt vorzugsweise bei einer Koppelungsvorrichtung 11 bzw. 12 zum Einsatz, wie sie in der Figur 9 gezeigt ist. Wesentliche Merkmale dieser Koppelungsvorrichtung sind:
- ein Speicher zur Speicherung elektrischer Energie,
- eine Schnittstelle 44 zur Übertragung elektrischer Energie in den Speicher, wobei die Schnittstelle mit einer korrespondierenden Gegenschnittstelle, die im Bereich der Kettenspeicher zur Speicherung der Schubketten angeordnet ist, derart zusammenwirkt, dass der Speicher bei eingezogenen Schubketten aufgeladen wird,
- eine Kommunikationsvorrichtung 43 in Form einer Funkantenne zum drahtlosen Austausch von Daten mit dem Steuerungssystem zur Steuerung der Werkzeugwechselvorrichtung,
- ein magnetisches Koppelelement in Form von einem Permanentmagneten 46 in Kombination mit einem Elektromagneten 31,
- ein Sensor 47 zur Detektion eines an die Koppelungsvorrichtung 11 bzw. 12 angekoppelten Umformwerkzeugs, wobei die Messsignale des Sensors 47 mittels der Kommunikationsvorrichtung 43 ab das Steuerungssystem übertragen werden, und
- ein EIN/AUS-Schalter 45 zur Aktivierung bzw. Deaktivierung der Stromzufuhr.

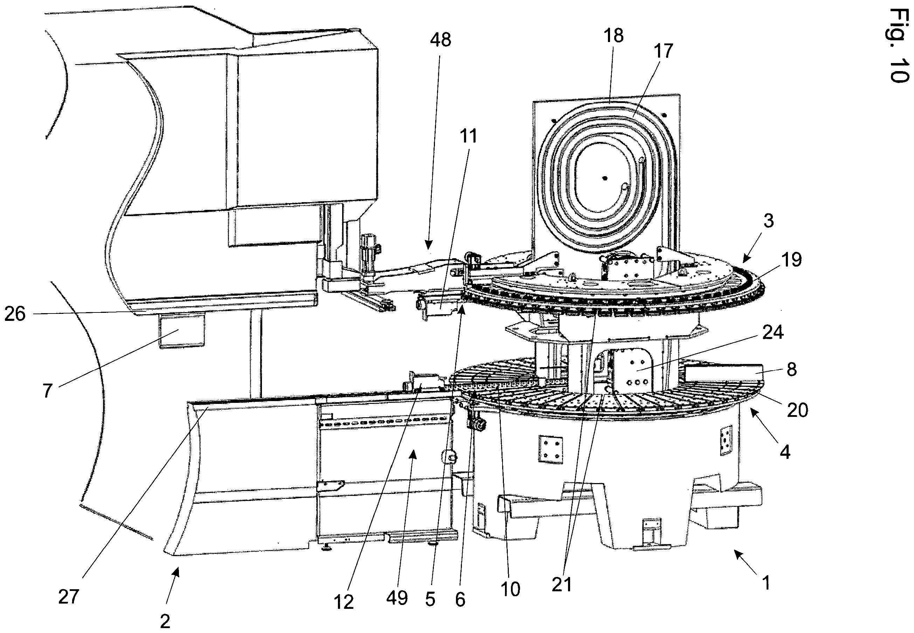

Fig. 10 zeigt eine Anordnung aus einer Umformpresse 2 und einer Werkzeugwechselvorrichtung 1 gemäß einer weiteren Ausführungsform der Erfindung. Im Vergleich zu der in der Fig. 1 dargestellten Anordnung ist die Werkzeugwechselvorrichtung 1 in diesem Fall - von vorne betrachtet - auf der rechten und nicht auf der linken Seite der Umformpresse 2 angeordnet.

Bis auf Details unterscheiden sich die beiden Ausführungsformen darüber hinaus in der Art der Anbindung der Werkzeugwechselvorrichtung 1 an die Umformpresse 2. Wesentlich dabei ist, dass die Vorrichtung 48 zur Anbindung des Klemmbalkens 26 für die Oberwerkzeuge 7 an das Werkzeugmagazin 3 der Werkzeugwechselvorrichtung 1 eine Wendeeinrichtung zur Drehung der Umformwerkzeuge (7) um 180° umfasst. Es sei noch angemerkt, dass eine solche Wendeeinrichtung unabhängig davon, auf welcher Seite der Umformpresse die Werkzeugwechselvorrichtung angeordnet ist, vorgesehen sein kann.

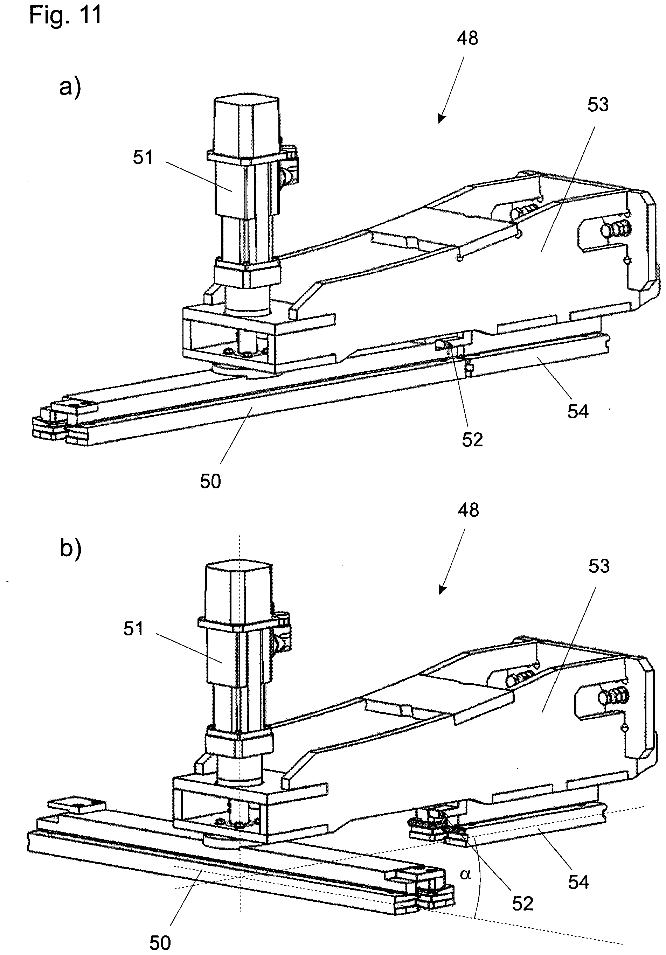

Details der Wendeeinrichtung gehen aus Fig. 11a) und Fig. 11b) hervor: Die Wendeeinrichtung umfasst eine Tragekonstruktion 53, die mit dem Werkzeugmagazin 3 verbindbar ist. An der Tragekonstruktion 53 ist ein Getriebemotor 51 angeordnet, mit dessen Hilfe ein erstes Führungselement 50 in unterschiedliche Drehstellungen relativ zu der Tragekonstruktion 53 bzw. relativ zu einem fest damit verbundenen zweiten Führungselement 54 gebracht werden kann. Über Näherungsschalter 52, auch Näherungsinitiatoren genannt, kann die jeweilige Drehstellung detektiert werden.

In der Stellung gemäß Fig. 11a) schließen die beiden Führungselemente 50 und 54 einen Winkel α von 0° bzw. 180° zueinander ein. Das bedeutet, dass die Führungselemente 50 und 54 in dieser Stellung kollinear zueinander und zu dem Klemmbalken 26 der Umformpresse 2 (vgl. Fig. 10) ausgerichtet sind. Somit liegt eine Anbindung/Koppelung des Werkzeugmagazins 3 mit der Umformpresse 2 vor und es können Umformwerkzeuge 7 mittels der Übertragungsvorrichtung 5 vom Werkzeugmagazin 3 zur Umformpresse 2 und in umgekehrter Richtung übertragen werden.

In der Stellung gemäß Fig. 11b) schließen die beiden Führungselemente 50 und 54 einen Winkel α von 90° zueinander ein (die Mittellängsachsen sind mittels gestrichelter Linien angedeutet). Das bedeutet, dass die Führungselemente 50 und 54 - und damit das Werkzeugmagazin 3 und die Umformpresse 2 - voneinander entkoppelt sind. In dieser, oder einer beliebigen Stellung, bei der die beiden Führungselemente 50 und 54 einen Winkel α ungleich 0° oder 180° zueinander einschließen, kann der Klemmbalken 26 der Umformpresse 2 unabhängig von dem Werkzeugmagazin, z.B. im Zuge eines Umformvorgangs, bewegt werden.

Ein weiterer Vorteil der Wendeeinrichtung besteht darin, dass auf einfache Weise die Umformwerkzeuge 7 um 180° gedreht werden können: Hierzu muss lediglich das zu drehende Umformwerkzeug 7 auf dem ersten Führungselement 50 platziert und dieses anschließend mittels des Getriebemotors 51 um 180° gedreht werden. Eine solche Drehung von 180° ist insbesondere dann von Vorteil, wenn asymmetrische Umformwerkzeuge 7 zum Einsatz kommen.

## Patentansprüche

1. Werkzeugwechselvorrichtung (1) für eine Umformpresse (2), insbesondere für eine Abkantpresse, mit wenigstens einem Werkzeugmagazin (3, 4) und wenigstens einer Übertragungsvorrichtung (5, 6) zur Übertragung der im wenigstens einen Werkzeugmagazin (3, 4) speicherbaren Umformwerkzeuge (7, 8) vom wenigstens einen Werkzeugmagazin (3, 4) zur Umformpresse (2) und in umgekehrter Richtung, wobei die wenigstens eine Übertragungsvorrichtung (5, 6) eine antreibbare Schubkette (9, 10) zur Übertragung von Druck- und Zugkräften umfasst, **dadurch gekennzeichnet, dass** das wenigstens eine Werkzeugmagazin (3, 4) eine antreibbare, drehbar gelagerte, und in Gebrauchslage vorzugsweise horizontal ausgerichtete, Scheibe (19, 20) mit Aufnahmemitteln (21) zur Aufnahme der Umformwerkzeuge (7, 8) umfasst.

2. Werkzeugwechselvorrichtung (1) nach Anspruch 1, wobei die Schubkette (9, 10) wenigstens eine Koppelungsvorrichtung (11, 12) zur temporären Koppelung eines Umformwerkzeugs (7, 8) an die Schubkette (9, 10) umfasst.

3. Werkzeugwechselvorrichtung (1) nach Anspruch 2, wobei ein Messsystem zur, vorzugsweise fortlaufenden, Bestimmung der Position der Koppelungsvorrichtung (11, 12) bzw. eines mit der Koppelungsvorrichtung (11,12) gekoppelten Umformwerkzeugs (7, 8) vorgesehen ist.

4. Werkzeugwechselvorrichtung (1) nach Anspruch 2 oder 3, wobei die Koppelungsvorrichtung (11, 12)
- wenigstens ein magnetisches Koppelelement (31, 46), vorzugsweise in Form von wenigstens einem Permanentmagneten in Kombination mit wenigstens einem Elektromagneten, und/oder
- wenigstens einen Sensor (47) zur Detektion eines an die Koppelungsvorrichtung (11, 12) angekoppelten Umformwerkzeugs (7, 8), und/oder
- wenigstens einen Speicher zur Speicherung elektrischer Energie, und vorzugsweise eine Schnittstelle (44) zur Übertragung elektrischer Energie in den Speicher, und/oder
- wenigstens eine Kommunikationsvorrichtung (43) zum drahtlosen Austausch von Daten umfasst.

5. Werkzeugwechselvorrichtung (1) nach einem der Ansprüche 1 bis 4, wobei die Schubkette (9, 10) über wenigstens eine Antriebsvorrichtung (24) antreibbar ist, wobei die wenigstens eine Antriebsvorrichtung (24) bevorzugt wenigstens ein Paar, besonders bevorzugt zwei Paare, von Antriebswellen (16) umfasst.

6. Werkzeugwechselvorrichtung (1) nach Anspruch 5, wobei die Kraftübertragung von der wenigstens einen Antriebsvorrichtung (24) auf die Schubkette (9, 10) über einen Reibschluss und/oder über einen Formschluss erfolgt.

7. Werkzeugwechselvorrichtung (1) nach Anspruch 5 oder 6, wobei die Antriebswellen (16) beschichtet sind, und/oder Anpresskräfte der Antriebswellen (16) an die Schubkette (9, 10) mittels wenigstens einer Einsteileinrichtung, die vorzugsweise wenigstens eine Feder umfasst, verstellbar sind.

8. Werkzeugwechselvorrichtung (1) nach einem der Ansprüche 1 bis 7, wobei die Werkzeugwechselvorrichtung (1) wenigstens einen, vorzugsweise spiralförmig ausgebildeten, Kettenspeicher (17, 18) zur Speicherung der Schubkette (9, 10) umfasst.

9. Werkzeugwechselvorrichtung (1) nach einem der Ansprüche 1 bis 8, wobei das wenigstens eine Werkzeugmagazin (3, 4) eine antreibbare, drehbar gelagerte Scheibe (19, 20) mit einer mittigen Ausnehmung (35, 36) umfasst und die wenigstens eine Schubkette (9, 10) aus dem Bereich der Ausnehmung (35, 36) zur Übertragung der im wenigstens einen Werkzeugmagazin (3, 4) speicherbaren Umformwerkzeuge (7, 8) vom wenigstens einen Werkzeugmagazin (3, 4) zur Umformpresse (2) und in umgekehrter Richtung zuführbar ist.

10. Werkzeugwechselvorrichtung (1) nach einem der Ansprüche 1 bis 9, wobei das wenigstens eine Werkzeugmagazin (3, 4) höhenverstellbar und/oder seitenverstellbar zur Anpassung der Höhenlage bzw. Seitenlage des wenigstens einen Werkzeugmagazins (3, 4) an die Umformpresse (2) ausgebildet ist.

11. Werkzeugwechselvorrichtung (1) nach einem der Ansprüche 1 bis 10, wobei die Aufnahmemittel (21) derart ausgebildet sind, dass die Umformwerkzeuge (7, 8) bei einer Drehung der Scheibe (19, 20) fixiert sind.

12. Werkzeugwechselvorrichtung (1) nach einem der Ansprüche 1 bis 11, wobei die Werkzeugwechselvorrichtung (1) wenigstens ein erstes Werkzeugmagazin (3) zur Speicherung von Stempelwerkzeugen (7) und wenigstens ein zweites Werkzeugmagazin (4) zur Speicherung von Gegenwerkzeugen (8) für die Stempelwerkzeuge (7) umfasst, und wobei die Werkzeugmagazine (3, 4) in Gebrauchslage vorzugsweise übereinander angeordnet sind.

13. Werkzeugwechselvorrichtung (1) nach Anspruch 12, wobei die Werkzeugwechselvorrichtung (1) eine erste Übertragungsvorrichtung (5) zur Übertragung der im ersten Werkzeugmagazin (3) speicherbaren Umformwerkzeuge (7) vom ersten Werkzeugmagazin (3) zur Umformpresse (2) und in umgekehrter Richtung sowie eine zweite Übertragungsvorrichtung (6) zur Übertragung der im zweiten Werkzeugmagazin (4) speicherbaren Umformwerkzeuge (8) vom zweiten Werkzeugmagazin (4) zur Umformpresse (2) und in umgekehrter Richtung umfasst, und wobei vorzugsweise beide Übertragungsvorrichtungen (5, 6) eine antreibbare Schubkette (9, 10) zur Übertragung von Druck- und Zugkräften umfassen.

14. Werkzeugwechselvorrichtung (1) nach einem der Ansprüche 1 bis 13, wobei ein Steuerungssystem zur Steuerung der Werkzeugwechselvorrichtung (1), vorzugsweise zur vollautomatischen Übertragung der im wenigstens einen Werkzeugmagazin (3, 4) speicherbaren Umformwerkzeuge (7, 8) vom wenigstens einen Werkzeugmagazin (3, 4) zur Umformpresse (2) und in umgekehrter Richtung gemäß einem vorbestimmten Programm, vorgesehen ist, und wobei das Steuerungssystem vorzugsweise wenigstens einen Prozessor und/oder einen Speicher zur Speicherung eines Programms umfasst.

15. Werkzeugwechselvorrichtung (1) nach einem der Ansprüche 1 bis 14, wobei ein Detektionssystem zur Detektion eines sich in der Nähe der Werkzeugwechselvorrichtung (1) befindlichen Objekts, vorzugsweise einer Bedienperson, vorgesehen ist, und wobei das Detektionssystem (1) bevorzugt Lasermittel umfasst.

16. Werkzeugwechselvorrichtung (1) nach einem der Ansprüche 1 bis 15, wobei die Werkzeugwechselvorrichtung (1) wenigstens eine Vorrichtung (22, 23, 48, 49) zur Anbindung der Werkzeugwechselvorrichtung (1) an die Umformpresse (2) umfasst, und wobei diese Vorrichtung (22, 23) vorzugsweise eine Führung für die Schubkette (9, 10) und/oder damit verbundene Elemente aufweist.

17. Werkzeugwechselvorrichtung (1) nach Anspruch 16, wobei die wenigstens eine Vorrichtung (48) zur Anbindung der Werkzeugwechselvorrichtung (1) an die Umformpresse (2) eine Wendeeinheit zur Drehung der Umformwerkzeuge (7), vorzugsweise um 180°, umfasst.

18. Anordnung aus einer Umformpresse (2) und einer Werkzeugwechselvorrichtung (1) nach einem der Ansprüche 1 bis 17.

19. Verwendung einer Schubkette (9, 10) zur Übertragung von Druck- und Zugkräften in einer Werkzeugwechselvorrichtung (1) nach einem der Ansprüche 1 bis 17.

## Claims

1. A tool changing device (1) for a forming press (2), in particular for a press brake, comprising at least one tool magazine (3, 4) and at least one transfer device (5, 6) for transferring the forming tools (7, 8) storable in the at least one tool magazine (3, 4) from the at least one tool magazine (3, 4) to the forming press (2) and in reverse direction, wherein the at least one transfer device (5, 6) comprises a drivable push chain (9, 10) for transferring pushing and pulling forces, **characterized in that** the at least one tool magazine (3, 4) comprises a drivable, rotatably mounted, and in position of use preferably horizontally aligned disc (19, 20) having receiving means (21) for receiving the forming tools (7, 8).

2. The tool changing device (1) according to claim 1, wherein the push chain (9, 10) comprises at least one coupling device (11, 12) for the temporary coupling of a forming tool (7, 8) to the push chain (9, 10).

3. The tool changing device (1) according to claim 2, wherein a measuring system is provided for, preferably continuously, determining the position of the coupling device (11, 12) and/or a forming tool (7, 8) coupled to the coupling device (11, 12).

4. The tool changing device (1) according to claim 2 or 3, wherein the coupling device (11, 12) comprises
- at least one magnetic coupling element (31, 46), preferably in form of at least one permanent magnet in combination with at least one electromagnet, and/or
- at least one sensor (47) for detecting a forming tool (7, 8) coupled to the coupling device (11, 12), and/or
- at least one storage for storing electrical power, and preferably an interface (44) for transferring electrical power into the storage, and/or
- at least one communication device (43) for the wireless exchange of data.

5. The tool changing device (1) according to one of claims 1 to 4, wherein the push chain (9, 10) can be driven by at least one drive device (24), wherein the at least one drive device (24) preferably comprises at least one pair, particularly preferred two pairs, of drive shafts (16).

6. The tool changing device (1) according to claim 5, wherein the transfer of force from the at least one drive device (24) to the push chain (9, 10) is performed by friction and/or by form-locking.

7. The tool changing device (1) as claimed in claim 5 or 6, wherein the drive shafts (16) are coated, and/or pressing forces of the drive shafts (16) can be adjusted to the push chain (9, 10) by means of at least one adjusting device, which preferably comprises at least one spring.

8. The tool changing device (1) according to one of claims 1 to 7, wherein the tool changing device (1) comprises at least one, preferably spiral-shaped, chain storage (17, 18) for storing the push chain (9, 10).

9. The tool changing device (1) according to one of claims 1 to 8, wherein the at least one tool magazine (3, 4) comprises a drivable, rotatably mounted disc (19, 20) with a central recess (35, 36) and the at least one push chain (9, 10) can be moved from the area of the recess (35, 36) for transferring the forming tools (7, 8) storable in at least one tool magazine (3, 4) from at least one tool magazine (3, 4) to the forming press (2) and in reverse direction.

10. The tool changing device (1) according to one of claims 1 to 9, wherein the at least one tool magazine (3, 4) is designed to be height-adjustable and/or laterally adjustable to adjust the height or lateral position of the at least one tool magazine (3, 4) to the forming press (2).

11. The tool changing device (1) according to one of claims 1 to 10, wherein the receiving means (21) are designed such that the forming tools (7, 8) are fixed on rotation of the disc (19, 20).

12. The tool changing device (1) according to one of claims 1 to 11, wherein the tool changing device (1) comprises at least one first tool magazine (3) for storing stamping tools (7) and at least one second tool magazine (4) for storing counter tools (8) for the stamping tools (7), and wherein the tool magazines (3, 4) are preferably arranged above one another in a position of use.

13. The tool changing device (1) as claimed in claim 12, wherein the tool changing device (1) comprises a first transfer device (5) for transferring the forming tools (7) storable in the first tool magazine (3) from the first tool magazine (3) to the forming press (2) and in reverse direction and a second transfer device (6) for transferring the forming tools (8) storable in the second tool magazine (4) from the second tool magazine (4) to the forming press (2) and in reverse direction, and wherein preferably both transfer devices (5, 6) comprise a drivable push chain (9, 10) for transferring pushing and pulling forces.

14. The tool changing device (1) according to one of claims 1 to 13, wherein a control system for controlling the tool changing device (1), preferably for the fully automatic transfer of the forming tools (7, 8) storable in at least one tool magazine (3, 4) from the at least one tool magazine (3, 4) to the forming press (2) and in reverse direction according to a prespecified program is provided and wherein the control system preferably comprises at least one processor and/or storage for storing a program.

15. The tool changing device (1) according to one of claims 1 to 14, wherein a detection system is provided for detecting an object located close to the tool changing device (1), preferably an operator, and wherein the detection system (1) preferably comprises laser means.

16. The tool changing device (1) according to one of claims 1 to 15, wherein the tool changing device (1) comprises at least one device (22, 23, 48, 49) for connecting the tool changing device (1) to the forming press (2), and wherein said device (22, 23) is preferably a guide for the push chain (9, 10) and/or elements connected to the latter.

17. The tool changing device (1) according to claim 16, wherein the at least one device (48) for connecting the tool changing device (1) to the forming press (2) comprises a turning unit for rotating the forming tools (7), preferably by 180°.

18. An arrangement comprising a forming press (2) and a tool changing device (1) according to one of claims 1 to 17.

19. A use of a push chain (9, 10) for transferring pushing and pulling forces in a tool changing device (1) according to one of claims 1 to 17.

## Revendications

1. Dispositif de changement d'outil (1) pour une presse de formage (2), plus particulièrement pour une presse plieuse, avec au moins un magasin d'outils (3, 4) et au moins un dispositif de transfert (5, 6) pour le transfert des outils de formage (7, 8) pouvant être stockés dans au moins un magasin d'outils (3, 4), d'au moins un magasin d'outils (3, 4) vers la presse de formage (2) et inversement, dans lequel l'au moins un dispositif de transfert (5, 6) comprend une chaîne de poussée entraînable (9, 10) pour la transmission des forces de pression et de traction, **caractérisé en ce que** l'au moins un magasin d'outils (3, 4) comprend un disque (19, 20) entraînable, logé de manière rotative et de préférence orienté horizontalement dans la position d'utilisation, avec des moyens de logement (21) pour le logement des outils de formage (7, 8).

2. Dispositif de changement d'outil (1) selon la revendication 1, dans lequel la chaîne de poussée (9, 10) comprend au moins un dispositif de couplage (11, 12) pour le couplage temporaire d'un outil de formage (7, 8) à la chaîne de poussée (9, 10).

3. Dispositif de changement d'outil (1) selon la revendication 2, dans lequel un système de mesure est prévu pour la détermination, de préférence en continu, de la position du dispositif de couplage (11, 12) respectivement d'un outil de formage (7, 8) couplé avec le dispositif de couplage (11, 12).

4. Dispositif de changement d'outil (1) selon la revendication 2 ou 3, dans lequel le dispositif de couplage (11, 12) comprend
- au moins un élément de couplage magnétique (31, 46), de préférence sous la forme d'au moins un aimant permanent en combinaison avec au moins un électro-aimant et/ou
- au moins un capteur (47) pour la détection d'un outil de formage (7, 8) couplé au dispositif de couplage (11, 12) et/ou
- au moins un accumulateur pour le stockage d'énergie électrique, et de préférence une interface (44) pour la transmission de l'énergie électrique vers l'accumulateur et/ou
- au moins un dispositif de communication (43) pour l'échange sans fil de données.

5. Dispositif de changement d'outil (1) selon l'une des revendications 1 à 4, dans lequel la chaîne de poussée (9, 10) peut être entraînée par l'intermédiaire d'au moins un dispositif d'entraînement (24), dans lequel l'au moins un dispositif d'entraînement (24) comprend de préférence au moins une paire, plus particulièrement de préférence deux paires, d'arbres d'entraînement (16).

6. Dispositif de changement d'outil (1) selon la revendication 5, dans lequel la transmission des forces de l'au moins un dispositif d'entraînement (24) vers la chaîne de poussée (9, 10) a lieu par friction et/ou par complémentarité de forme.

7. Dispositif de changement d'outil (1) selon la revendication 5 ou 6, dans lequel les arbres d'entraînement (16) sont revêtus et/ou les forces de pression des arbres d'entraînement (16) contre la chaîne de poussée (9, 10) peuvent être ajustées au moyen d'au moins un dispositif de réglage qu comprend de préférence un ressort.

8. Dispositif de changement d'outil (1) selon l'une des revendications 1 à 7, dans lequel le dispositif de changement d'outil (1) comprend au moins un dispositif de stockage de chaîne (17, 18), de préférence en spirale, pour le stockage de la chaîne de poussée (9, 10).

9. Dispositif de changement d'outil (1) selon l'une des revendications 1 à 8, dans lequel l'au moins un magasin d'outils (3, 4) comprend un disque (19, 20) entraînable logé de manière rotative, avec un évidement central (35, 36) et l'au moins une chaîne de poussée (9, 10) peut être conduite hors de la zone de l'évidement (35, 36), pour le transfert des outils de formage (7, 8), pouvant être stockés dans au moins un magasin d'outils (3, 4), d'au moins un magasin d'outils (3, 4) vers la presse de formage (2) et inversement.

10. Dispositif de changement d'outil (1) selon l'une des revendications 1 à 9, dans lequel l'au moins un magasin d'outils (3, 4) est réglable en hauteur et/ou mobile latéralement pour l'adaptation de la position en hauteur respectivement de la position latérale de l'au moins un magasin d'outils (3, 4) à la presse de formage (2).

11. Dispositif de changement d'outil (1) selon l'une des revendications 1 à 10, dans lequel les moyens de logement (21) sont conçus de façon à ce que les outils de formage (7, 8) soient fixés lors d'une rotation du disque (19, 20).

12. Dispositif de changement d'outil (1) selon l'une des revendications 1 à 11, dans lequel le dispositif de changement d'outil (1) comprend au moins un premier magasin d'outils (3) pour le stockage d'outils de poinçonnage (7) et au moins un deuxième magasin d'outils (4) pour le stockage de contre-outils (8) pour les outils de poinçonnage (7) et dans lequel les magasins d'outils (3, 4) sont de préférence superposés dans la position d'utilisation.

13. Dispositif de changement d'outil (1) selon la revendication 12, dans lequel le dispositif de changement d'outil (1) comprend un premier dispositif de transfert (5) pour le transfert des outils de formage (7) stockables dans le premier magasin d'outils (3) du premier magasin d'outils (3) vers la presse de formage (2) et inversement, ainsi qu'un deuxième dispositif de transfert (6) pour le transfert des outils de formage (8) stockables dans le deuxième magasin d'outils (4) du deuxième magasin d'outils (4) vers la presse de formage (2) et inversement et dans lequel, de préférence les deux dispositifs de transfert (5, 6) comprennent une chaîne de poussée (9, 10) entraînable pour la transmission des forces de pression et de traction.

14. Dispositif de changement d'outil (1) selon l'une des revendications 1 à 13, dans lequel un système de commande est prévu pour le contrôle du dispositif de changement d'outil (1), de préférence pour le transfert entièrement automatique des outils de formage (7, 8) stockables dans l'au moins un magasin d'outils (3, 4), de l'au moins un magasin d'outils (3, 4) vers la presse de formage (2) et inversement selon un programme prédéterminé et dans lequel le système de commande comprend de préférence au moins un processeur et/ou une mémoire pour l'enregistrement d'un programme.

15. Dispositif de changement d'outil (1) selon l'une des revendications 1 à 14, dans lequel un système de détection est prévu pour la détection d'un objet se trouvant à proximité du dispositif de changement d'outil (1), de préférence d'un opérateur, et dans lequel le système de détection (1) comprend de préférence des moyens de type laser.

16. Dispositif de changement d'outil (1) selon l'une des revendications 1 à 15, dans lequel le dispositif de changement d'outil (1) comprend au moins un dispositif (22, 23, 48, 49) pour la liaison du dispositif de changement d'outil (1) à la presse de formage (2), et dans lequel ce dispositif (22, 23) comprend de préférence un guidage pour la chaîne de poussée (9, 10) et/ou les éléments qui y sont reliés.

17. Dispositif de changement d'outil (1) selon la revendication 16, dans lequel l'au moins un dispositif (48) comprend, pour la liaison du dispositif de changement d'outil (1) à la presse de formage (2), une unité de retournement pour la rotation des outils de formage (7), de préférence de 180°.

18. Disposition d'une presse de formage (2) et d'un dispositif de changement d'outil (1) selon l'une des revendications 1 à 17.

19. Utilisation d'une chaîne de poussée (9, 10) pour la transmission des forces de pression et de traction dans un dispositif de changement d'outil (1) selon l'une des revendications 1 à 17.
